# DEMANDE DE BREVET EUROPEEN

(11) **EP 1 860 020 A1**
(43) Date de publication de la demande: **28.11.2007**
(21) Numéro de dépôt: 07290637.3
(22) Date de dépôt: 16.05.2007
(51) Int. Cl.: B62D 25/08, B62D 21/15

(54) **Face avant de véhicule automobile escamotable en choc, et véhicule automobile correspondant.**

(30) Priorité: 22.05.2006 FR 0604577
(71) Demandeur: Faurecia Bloc Avant, 92000 Nanterre (FR)
(72) Inventeur: Riviere, Caroline, 25700 Valentingney (FR); Berne, Sébastien, 70400 Luze (FR)
(74) Mandataire: Domenego, Bertrand

(57) **Abrégé**

Cette face avant (2) de véhicule automobile est du type comprenant un support (18) de radiateur (14) et/ou de groupe moto-ventilateur (16), et des moyens de fixation du support (18) sur la caisse (4) du véhicule automobile, permettant un déplacement du support (18) d'une position avancée, en l'absence de choc, vers au moins une position reculée, en cas de choc.

Selon un aspect de l'invention, les moyens de fixation comprennent des attaches métalliques (28) déformables en choc, fixées sur des bords (18a, 18b) opposés du support (18), chaque attache (28) étant adaptée pour se déformer suivant une direction longitudinale du véhicule, en absorbant de l'énergie, en cas de choc décalé du côté de cette attache (28), et pour former une charnière de rotation du support (18) en cas de choc décalé du côté du support (28) opposé à cette attache (28).

## Description

Le présente invention concerne une face avant de véhicule automobile, du type comprenant un support de radiateur et/ou d'un groupe moto-ventilateur, et des moyens de fixation du support sur la caisse du véhicule automobile, permettant un déplacement du support d'une position avancée, en l'absence de choc, vers au moins une position reculée, en cas de choc.

Les véhicules automobiles possèdent généralement des poutres de pare-chocs fixées à la caisse par des absorbeurs de chocs pour encaisser les chocs frontaux de faible intensité.

Cependant, des chocs d'intensité plus élevée peuvent endommager des éléments du véhicule situés derrière la poutre de pare-chocs avant, et en particulier la face avant du véhicule automobile, qui supporte notamment le radiateur et un groupe moto-ventilateur (GMV).

Il est souhaitable de limiter l'endommagement de la face avant dont la réparation ou le remplacement peuvent s'avérer coûteux.

Pour ce faire, EP 1 323 566 A1 propose une face avant possédant un cadre de support dont l'extrémité supérieure est montée pivotante autour d'un axe horizontal sur la caisse, et dont l'extrémité inférieure est fixée sur la caisse par une attache reliée à un absorbeur de choc disposé entre une poutre de pare-chocs et un longeron de la caisse. Ceci permet le déplacement de l'extrémité inférieure du cadre du support vers l'arrière en cas de choc provoquant l'écrasement de l'absorbeur de choc.

Néanmoins, une telle fixation du support de face avant ne permet pas de préserver l'intégrité de la face avant de façon satisfaisante.

Un but de l'invention est de fournir une face avant permettant de préserver la face avant de façon améliorée en cas de choc.

A cet effet, l'invention propose une face avant du type précité, caractérisée en ce que les moyens de fixation comprennent des attaches métalliques déformables en choc, fixées sur des bords opposés du support, chaque attache étant adaptée pour se déformer suivant une direction longitudinale du véhicule, en absorbant de l'énergie, en cas de choc décalé du côté de cette attache, et pour former une charnière de rotation du support en cas de choc décalé du côté du support opposé à cette attache.

Selon d'autres modes de réalisation, l'invention comprend une ou plusieurs des caractéristiques suivantes, prise(s) isolément ou selon toutes les combinaisons techniquement possibles :
- chaque attache forme charnière de rotation du support par rapport à la caisse sensiblement autour d'un axe vertical en cas de choc décalé latéralement du côté du support opposé à cette attache, les attaches étant réparties autour du support pour permettre une rotation du support par rapport à la caisse autour d'un axe sensiblement horizontal en cas de choc décalé verticalement vers le haut ou le bas du support ;
- la face avant comprend au moins deux paires d'attaches, les attaches d'une paire étant alignées verticalement et espacées, chaque attache d'une paire étant alignée horizontalement avec une des attaches de chaque autre paire d'attaches ;
- la face avant comprend au moins deux d'attaches fixées sur un même bord latéral du support, les attaches étant non-alignées verticalement ;
- les moyens de fixation sont constitués par quatre attaches ;
- chaque attache comprend une région de déformation s'étendant autour d'un axe et constituant une amorce de déformation programmée de l'attache, sans rupture, en cas de choc du côté de cette attache, et constituant une charnière d'axe l'axe de la région de déformation en cas de choc décalé du côté du support opposé à cette attache ;
- la région de déformation est arrondie ;
- chaque attache comprend un aile s'étendant longitudinalement, la région de déformation étant formée par un pli de l'aile, s'étendant sur toute la largeur de l'aile et faisant saillie sur une face de l'aile ;
- l'aile est espacée transversalement du support, en ce que le pli fait saillie sur une face de l'aile tournée vers le support ; et
- la partie intermédiaire comprend une âme arrondie formant région de déformation et deux ailes latérales s'étendant longitudinalement à partir de l'âme, une des ailes étant reliée au support, et l'autre aile étant destinée à être reliée à la caisse.

L'invention concerne également un véhicule automobile comprenant une caisse et une face avant telle que définie ci-dessus, fixée sur la caisse par l'intermédiaire des moyens de fixation.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective d'une face avant de véhicule automobile conforme à l'invention ;
- la figure 2 est une vue schématique en perspective de deux attaches de fixation de la face avant de la figure 1 sur une caisse du véhicule automobile ;
- les figures 3 et 4 sont des vues de dessus de la face avant de la figure 1, respectivement avant et après un choc « réparabilité » ;
- les figures 5 et 6 sont des vues de côté de la face avant de la figure 1, respectivement avant et après un choc « piéton » ;
- les figures 7 et 8 sont des vues en coupe selon VII-VII et VIII-VIII de la face avant de la figure 6 ;
- la figure 9 est une en perspective analogue à celle de la figure 2, illustrant des attaches selon une variante de l'invention ;
- les figures 10 et 11 sont des vues de dessus d'une attache de la figure 9, respectivement avant et après déformation ;
- les figures 12 à 17 sont des vues analogues à celles des figures 3 à 8, illustrant une face avant munie des attaches de la figure 9, dans des configurations avant et après des chocs « réparabilité » et « piéton » ; et
- les figures 18 et 19 sont des vues schématiques de face d'attaches selon des variantes de l'invention.

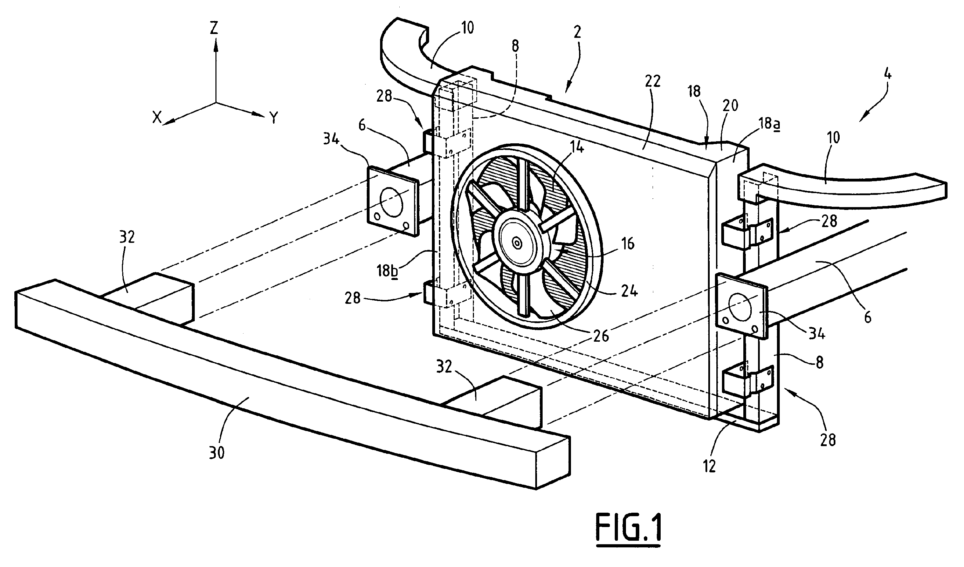

Dans la description qui va suivre, les termes « avant », « arrière », « longitudinal », « transversal », « latéral », « haut », « bas », « supérieur » et « inférieur » s'entendent par référence au repère orthogonal usuel des véhicules automobiles, représenté sur la figure 1, et comprenant :
- un axe longitudinal X-X, horizontal et dirigé de l'arrière vers l'avant,
- un axe transversal Y-Y, horizontal et dirigé de la droite vers la gauche, et
- un axe vertical Z-Z, dirigé du bas vers le haut.

Telle que représentée sur la figure 1, une face avant 2 est fixée à l'avant de la caisse 4 d'un véhicule automobile.

La caisse 4 comprend deux longerons 6 ou « brancard », deux piliers 8, deux bras de renfort 10, et une traverse 12.

Chaque longeron 6 est fixé par son extrémité arrière à un tablier structurel (non représenté) du véhicule, et s'étend longitudinalement vers l'avant.

Chaque pilier 8 est fixé par sa partie médiane à l'extrémité avant d'un longeron 6 respectif, et s'étend sensiblement verticalement.

Chaque bras 10 s'étend latéralement vers l'extérieur et longitudinalement vers l'arrière, entre l'extrémité supérieure d'un pilier 8 respectif et une paroi latérale (non représentée) de la caisse 4.

La traverse 12 s'étend transversalement et relie les extrémités inférieures des piliers 8.

La face avant 2 comprend un radiateur 14, un groupe moto-ventilateur (GMV) 16, et un support 18 pour porter le radiateur 14 et le GMV 16.

Le support 18 comprend un cadre 20 et un carénage 22 de canalisation d'un flux d'air disposé à l'avant du cadre 20. Le carénage 22 possède une ouverture 24 circulaire d'entrée d'air.

Le radiateur 14 est porté par le cadre 20 et s'étend en travers de celui-ci. Le GMV 16 est porté par le carénage 22, une hélice 26 du GMV 16 s'étendant en travers de l'ouverture 24 pour forcer un flux d'air à travers le radiateur 14. Le radiateur 14 est visible à travers l'ouverture 24, derrière l'hélice 26.

La face avant 2 est disposée dans un espace de réception délimité par les deux piliers 8 et la traverse 12.

La face avant 2 comprend des moyens de fixation du support 18 sur la caisse 4, constitués par quatre cavaliers ou attaches 28 métalliques à déformation programmée en cas de choc.

Les attaches 28 comprennent une paire d'attaches 28 fixées sur un premier bord 18a latéral du support 18, et une paire d'attaches 28 fixées sur un deuxième bord 18b latéral du support 18, opposé au premier bord 18a.

Les attaches 28 d'une même paire sont espacées et alignées verticalement. Chaque attache 28 d'une paire est alignée horizontalement avec une attache de l'autre paire.

Chaque attache 28 est destinée à être fixée sur le pilier 8 adjacent. Ainsi, le support 18 est fixé sur chacun des piliers 8 par deux attaches 28.

La caisse 4 comprend une poutre 30 de pare-chocs fixée par l'intermédiaire d'absorbeurs de chocs 32 sur des flasques 34 portés par les extrémités avant des longerons 6. En l'absence de choc, la poutre 30 s'étend devant la face avant 2, à distance de celle-ci

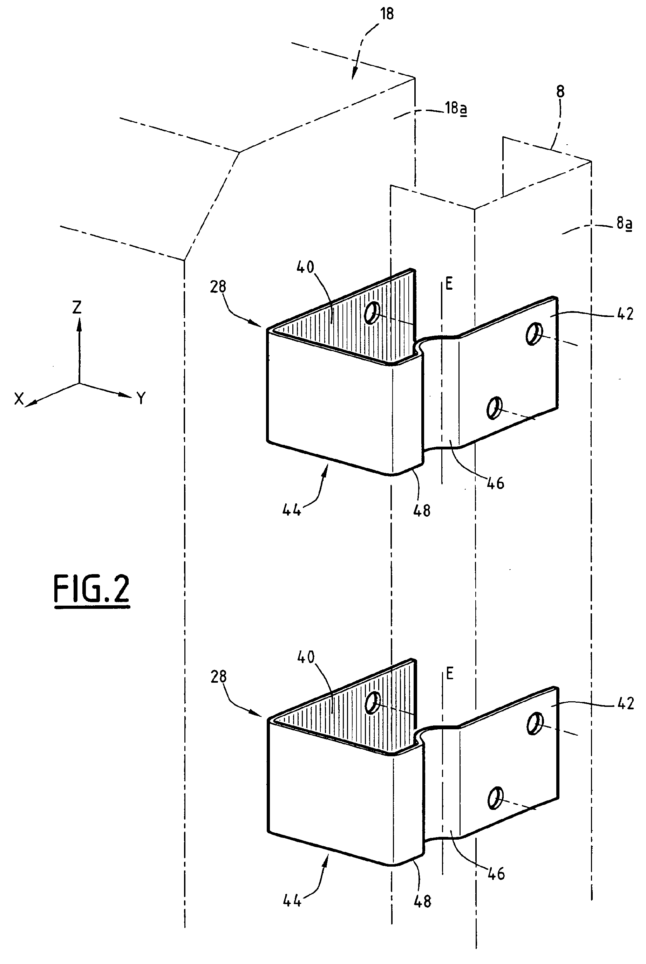

Tel que représentée sur la figure 2, chaque attache 28 comprend une partie 40 de fixation de l'attache 28 sur le support 18, une partie 42 de fixation de l'attache sur un pilier 8, et une partie intermédiaire 44 de liaison des parties 40 et 42, à déformation programmée en cas de choc.

La partie 44 est profilée verticalement, et possède une zone 46 formant, en cas de choc, amorce de déformation ou charnière.

Dans l'exemple illustré, la partie 44 possède une aile 48 s'étendant dans un plan longitudinal, s'étendant verticalement et longitudinalement, à distance latéralement du support 18, et la zone 46 est formée par un pli de l'aile 48. Le pli est en forme de gouttière, s'étend verticalement sur toute la hauteur de l'aile 48, et fait saillie sur la face de l'aile 48 orientée vers le support 18. L'aile 48 est prolongée à son extrémité arrière par la partie 42, qui est fixée sur une face 8a du pilier 8 tournée du côté opposé au support 18. L'aile 48 est prolongée à son extrémité avant par une deuxième aile transversale, elle-même prolongée par la partie 40 s'étendant longitudinalement vers l'arrière à partir de cette deuxième aile, de façon que l'attache possède une forme générale en U ouvert vers l'arrière.

Le pli en forme de gouttière est arrondi autour d'un axe E vertical. Les axes E des attaches 28 situées sur un même bord 18a, 18b du support 18 sont alignés.

Les attaches 28 sont obtenues très facilement par pliage de feuilles métalliques.

Chaque attache 28 est fixée sur le support 18 par exemple par rivetage, boulonnage ou surmoulage de sa partie 40 par le support 18 moulé en matière plastique. La partie 42 de chaque attache est par exemple rivetée ou boulonnée sur le pilier 8 correspondant.

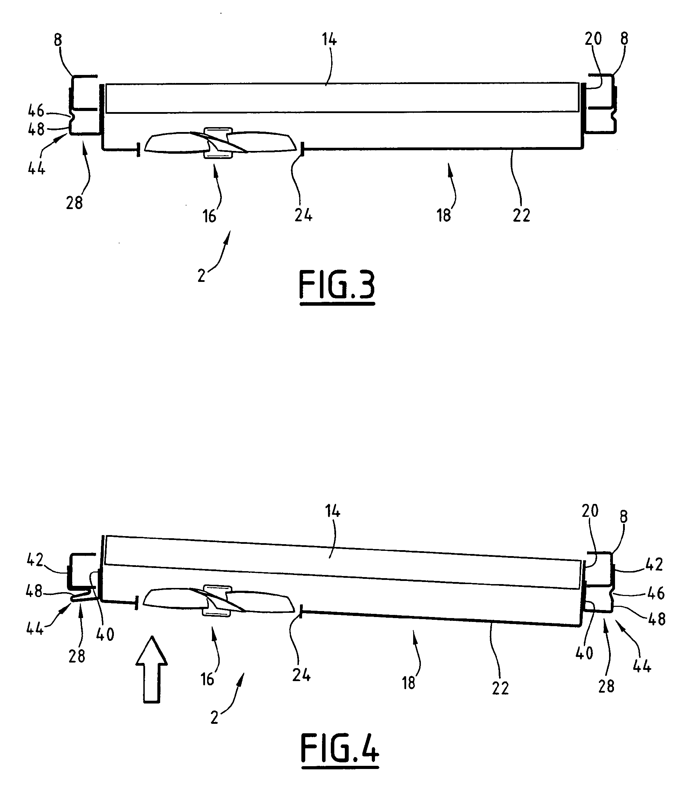

Les attaches 28 permettent le déplacement de la face avant 2 d'une position avancée (figure 3) en l'absence de choc, vers une position reculée (figure 4) en cas de choc du type choc « réparabilité ».

Un choc « réparabilité » est un choc à une vitesse de l'ordre de 15 km/h, avec un obstacle décalé latéralement par rapport à l'axe longitudinal médian du véhicule, et couvrant 40% de la largeur du véhicule.

En cas de choc « réparabilité », la poutre 30 se déforme et recule par écrasement de l'absorbeur 32 situé du côté du choc, jusqu'à venir en appui sur la face avant 2. A ce moment, les attaches 28 se déforment pour permettre à la face avant 2 de reculer.

Les attaches 28 situées du côté du choc (à gauche sur la figure 4) se déforment par écrasement de leur partie 44, et en particulier par pliage de leur aile 48 transversalement vers l'intérieur, comme illustré à gauche sur la figure 4. Le pliage s'initie dans la zone 46, qui constitue une amorce de déformation. La zone 46 se déroule vers l'intérieur en absorbant de l'énergie.

De côté opposé au choc (à droite sur la figure 4), chacune des attaches 28 se déforme par écartement des bords de sa zone 46, ce qui permet la rotation du support 18 autour d'un axe sensiblement vertical pour permettre le mouvement vers l'arrière du support 18 du côté du choc. La zone 46 forme dans ce cas une charnière.

La zone 46 de chaque attache 28 constitue donc une charnière et une amorce de déformation en cas de choc subi par le véhicule.

Ainsi, la face avant 2 recule en cas de choc « réparabilité » du côté gauche ou droit, en absorbant de l'énergie, de façon à préserver l'intégrité des équipements qu'elle supporte, en particulier le radiateur 14 et le GMV 16.

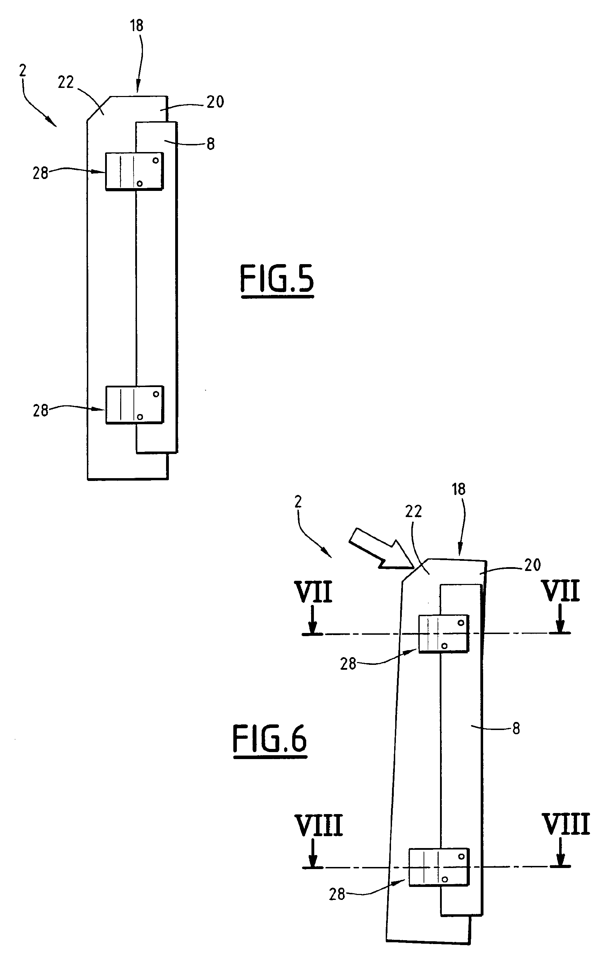

Les attaches 28 permettent le déplacement de la face avant 2 de sa position avancée (figure 5) en l'absence de choc, vers une position reculée (figure 6) en cas de choc « piéton », dans laquelle la face avant 2 est inclinée vers l'arrière, de quelques degrés, par exemple 5 à 10°.

Dans un choc « piéton », le bassin ou le fémur d'un piéton heurte le nez du capot d'un véhicule automobile, qui se déforme et vient en appui sur la partie supérieure de la face avant 2, qui subit un impact sur sa partie supérieure, l'impact étant dirigé vers l'arrière et vers le bas, avec un angle par rapport à la verticale de l'ordre de 40 à 50°.

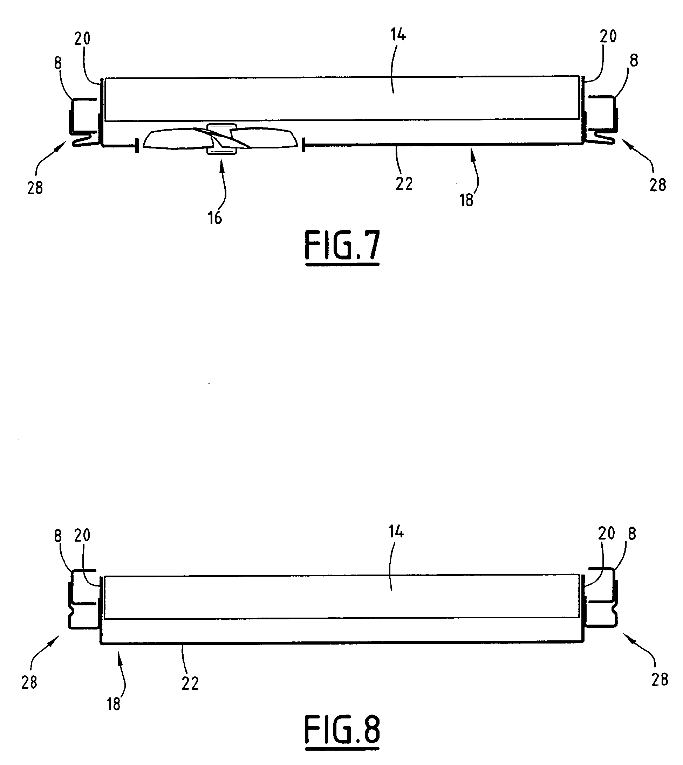

En cas de choc « piéton », les deux attaches 28 supérieures s'écrasent au moins partiellement (figure 7), tandis que les deux attaches 28 inférieures ne se déforment que légèrement (figure 8) pour permettre la rotation de la face avant 2.

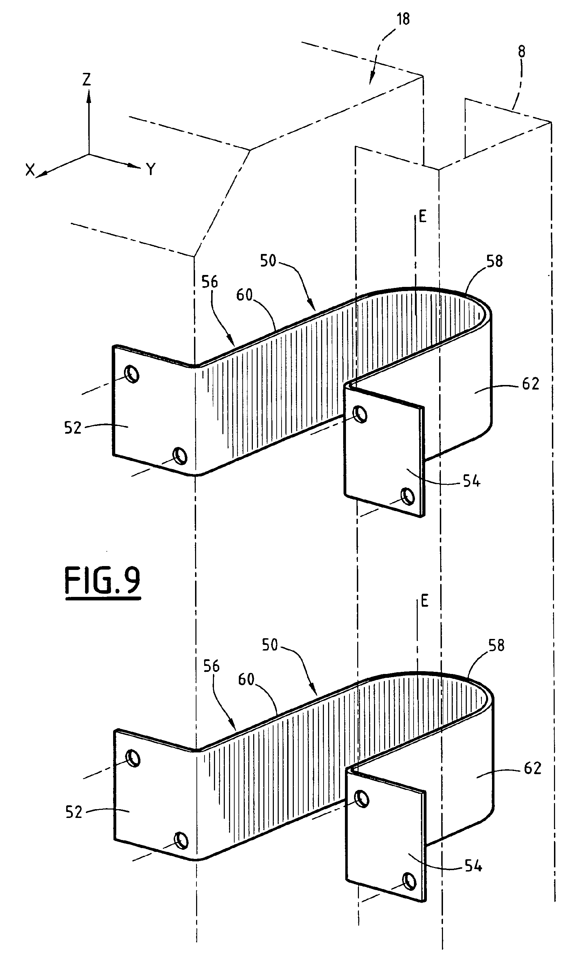

Dans une variante illustrée sur la figure 9, les attaches sont différentes, mais fonctionnent de façon analogue.

Plus précisément, chaque attache 50 possède une partie 52 fixée sur le support 18, une partie 54 de fixation de l'attache 50 sur le pilier 8, et une partie 56 intermédiaire de liaison à déformation programmée en cas de choc, reliant les parties 52 et 54.

La partie 56 est profilée verticalement, et possède une section en U. La partie 56 comprend une âme 58 arrondie autour d'un axe E d'enroulement dirigé verticalement, et deux ailes 60, 62, sensiblement parallèles, s'étendant chacune dans un plan longitudinal, vers l'avant à partir de l'âme 58. Les extrémités des ailes 60, 62 opposées à l'âme 58 sont prolongées par les parties 52, 54 respectivement, vers l'extérieur de la partie 56.

Les axes E des âmes 58 des attaches 50 fixées sur un même bord du support 18 sont alignés.

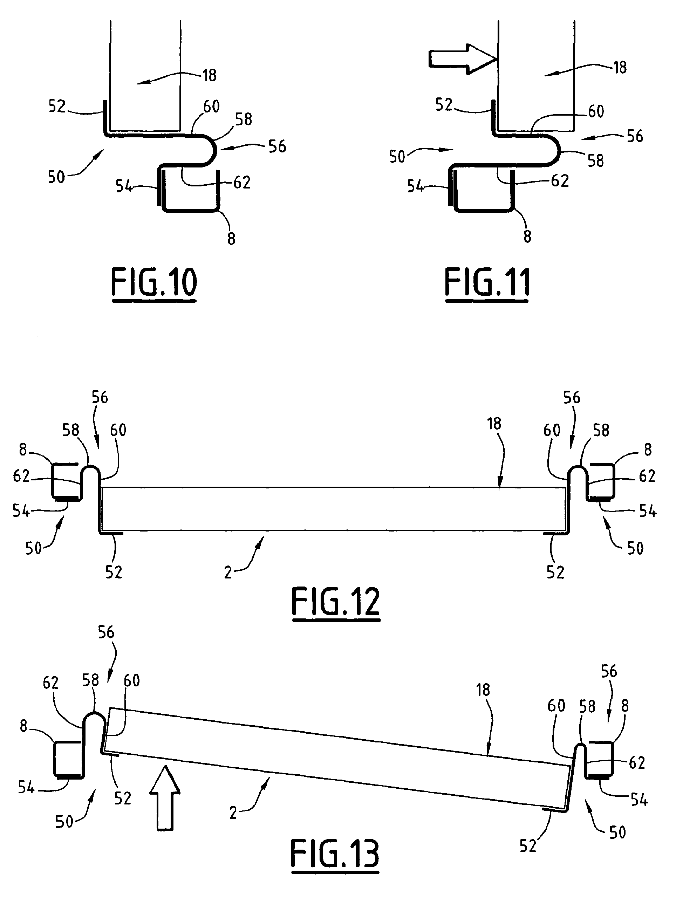

Tel que représenté sur les figures 10 et 11, en cas de choc, une attache 50 se déforme par enroulement de l'âme 58 du côté de son aile 60, et déroulement du côté de son aile 62. Il s'ensuit que son aile 60 se raccourcit, tandis que son aile 62 s'allonge. Cette déformation s'effectue avec une absorption d'énergie. L'âme 58 forme une amorce de déformation.

Telles que représentées sur les figures 12 et 13 représentant des vues de dessus de la face avant 2 respectivement avant et après un choc réparabilité, les attaches 50 du côté du choc se déforment par enroulement /déroulement, et les attaches 50 du côté opposé au choc se déforment par modification de l'inclinaison relative entre leur ailes 60 et 62 s'accompagnant éventuellement d'un écrasement de l'âme 58. Dans ce cas, la partie 56 forme une charnière de rotation du support 18 autour d'un axe vertical.

La déformation des attaches 50 du côté du choc permet le déplacement vers l'arrière du support 18 pour éviter l'endommagement des équipements portés par la face avant 2, et du côté opposé au choc, les attaches 50 forment des charnières permettent la rotation de la face avant 2 autour d'un axe vertical.

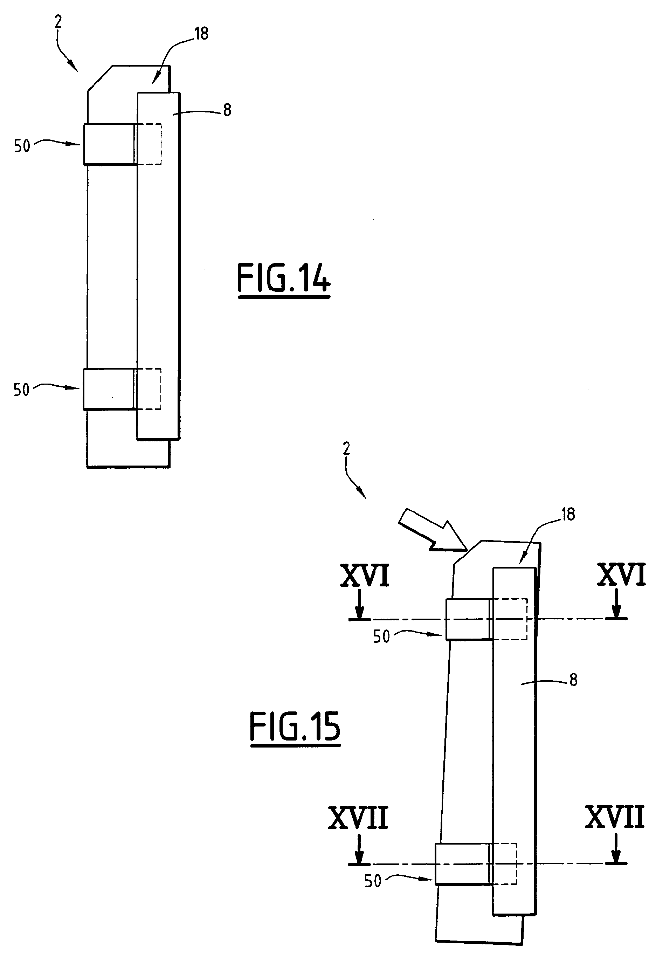

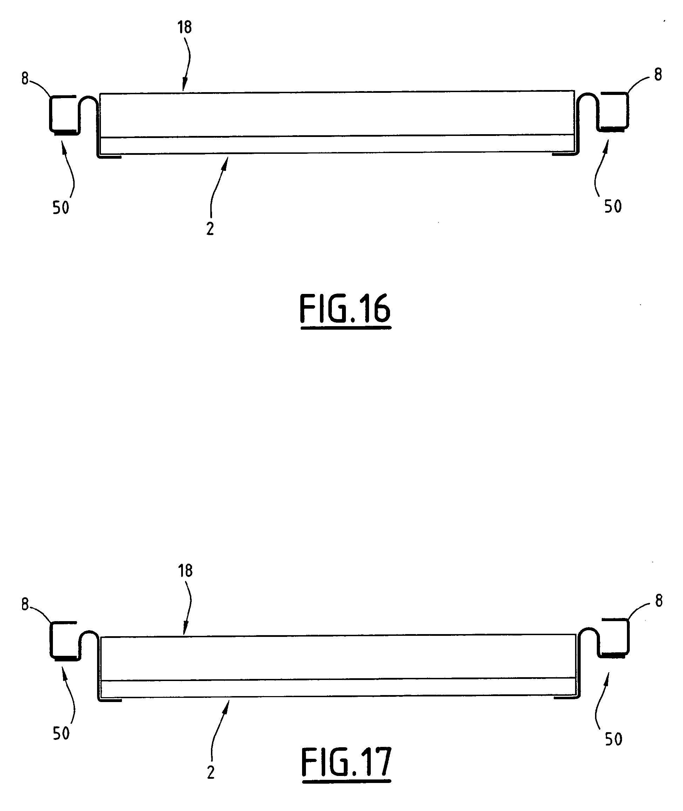

Comme illustré sur les figures 14 à 17, en cas de choc « piéton », les attaches 50 supérieures se déforment par enroulement / déroulement (figure 16), tandis que les attaches 50 inférieures ne se déforment que légèrement (figure 17) pour permettre le basculement vers l'arrière de la partie supérieure de la face avant 2 de 5 à 10°.

Dans le mode de réalisation des figures 9 à 17, chaque attache a son ses ailes s'étendant longitudinalement vers l'avant à partir de son âme arrondie. En variante, les ailes d'une attache s'étendent longitudinalement vers l'arrière à partir de l'âme. Dans ce cas, les parties de fixation sur le support et le pilier sont par exemple fixées sur des faces du support et du pilier tournées vers l'arrière. Lorsque l'attache sert de charnière, les ailes se rapprochent au lieu de s'écarter.

Dans le mode de réalisation de la figure 9, les parties 52 et 54 de fixation de l'attache sur le support 18 et la caisse sont situées à la même hauteur.

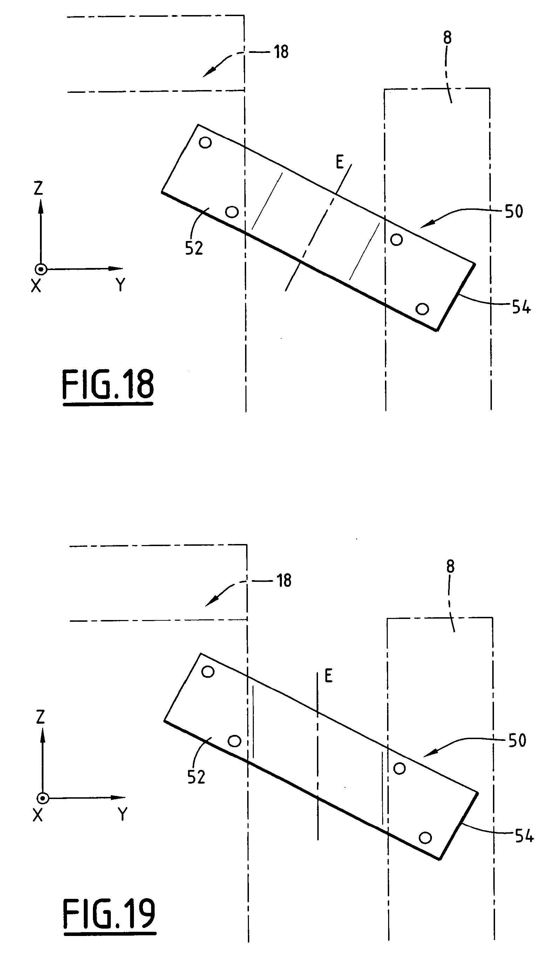

En variante, comme illustré sur la figure 19, les parties 52, 54 sont décalées verticalement l'une par rapport à l'autre, et la partie intermédiaire s'étend en hélice autour de l'axe d'enroulement E dirigé verticalement.

La déformation de l'attache se produit de façon identique, que cela soit en cas de déformation longitudinale de l'attache ou lorsque l'attache fait office de charnière.

Dans une variante illustrée sur la figure 18, une attache 50 est identique à celles du mode de réalisation de la figure 9, mais l'axe E d'enroulement fait un angle avec l'axe Z.

Dans ce cas, de préférence, les attaches sont orientées de façon à favoriser la rotation de la face avant autour d'un axe vertical ou horizontal selon le type de choc. Ainsi, de préférence, les axes E de deux attaches situées sur des bords latéraux opposés du support, sensiblement à la même hauteur, sont inclinées de façon symétrique par rapport à un plan longitudinal médian du véhicule.

De manière générale, les attaches possèdent une rigidité verticale suffisante pour soutenir le poids la face avant en l'absence de choc.

Les attaches permettent l'escamotage de la face avant d'une position avancée vers plusieurs positions reculées correspondant à différents types de choc, et en particulier le choc « réparabilité » et le choc « piéton ».

Chaque attache est déformable de façon programmée d'une part longitudinalement, avec absorption d'énergie, en cas de choc du côté de l'attache, et, d'autre part, par déformation du type « charnière » permettant la rotation du support de la face avant en cas de choc du côté du support opposé à l'attache.

Ainsi, de manière générale, l'invention concerne une face avant de véhicule automobile, comprenant un support de radiateur et/ou d'un groupe moto-ventilateur, et des moyens de fixation du support sur la caisse du véhicule automobile, permettant un déplacement du support d'une position avancée, en l'absence de choc, vers au moins une position reculée, en cas de choc frontal subi par le véhicule, les moyens de fixation comprenant des attaches métalliques déformables en cas choc, fixées sur des bords opposés du support, chaque attache comprenant une région profilée s'étendant suivant un axe sensiblement vertical, constituant une amorce de déformation programmée de l'attache, sans rupture, en cas de choc du côté de cette attache, et constituant une charnière d'axe sensiblement vertical en cas de choc décalé latéralement du côté du support opposé à cette attache.

La répartition des quatre attaches, alignées deux par deux verticalement et horizontalement, facilite la rotation de la face avant autour d'un axe vertical en cas de choc « réparabilité » décalé latéralement et autour d'un axe horizontal en cas de choc « piéton » décalé verticalement. L'espacement des attaches d'une même paire et l'élasticité des attaches métalliques permet la rotation de la face avant autour d'un axe horizontal avec une amplitude suffisante en cas de choc « piéton ».

En variante, des attaches fixées sur un même bord latéral du support sont non-alignées verticalement. Dans ce cas, il est possible de modifier l'épaisseur ou la géométrie d'une des attaches pour conserver un axe de rotation vertical du support en cas de choc décalé du côté du support opposé à ces attaches, malgré le décalage des attaches.

Ainsi, de manière générale, l'invention concerne une face avant de véhicule automobile, comprenant un support de radiateur et/ou de groupe moto-ventilateur, et des moyens de fixation du support sur la caisse du véhicule automobile, permettant un déplacement du support d'une position avancée, en l'absence de choc, vers au moins une position reculée, en cas de choc, les moyens de fixation comprenant des attaches métalliques déformables en choc adaptées pour former charnière de rotation du support par rapport à la caisse sensiblement autour d'un axe vertical en cas de choc décalé latéralement d'un côté du support, et pour permettre une rotation du support par rapport à la caisse sensiblement autour d'un axe horizontal en cas de choc décalé verticalement vers le haut ou le bas du support.

Les attaches métalliques sont obtenues facilement par pliages de tôles. Les attaches métalliques sont facilement fixées sur le support par surmoulage.

En outre, les attaches se déforment en s'écrasant, sans rompre. Il en résulte que, même après le choc, la face avant reste fixée sur la caisse, ce qui permet de rejoindre un garage pour faire effectuer les réparations, sans devoir recourir au remorquage.

## Revendications

1. Face avant (2) de véhicule automobile, du type comprenant un support (18) de radiateur (14) et/ou de groupe moto-ventilateur (16), et des moyens de fixation du support (18) sur la caisse (4) du véhicule automobile, permettant un déplacement du support (18) d'une position avancée, en l'absence de choc, vers au moins une position reculée, en cas de choc,
**caractérisée en ce que** les moyens de fixation comprennent des attaches métalliques (28, 50) déformables en choc, fixées sur des bords (18a, 18b) opposés du support (18), chaque attache (28) étant adaptée pour se déformer suivant une direction longitudinale du véhicule, en absorbant de l'énergie, en cas de choc décalé du côté de cette attache (28), et pour former une charnière de rotation du support (18) autour d'un axe vertical en cas de choc décalé latéralement du côté du support (28) opposé à cette attache (28).

2. - Face avant (2) selon la revendication 1, **caractérisée en ce que**, les attaches (28) sont réparties autour du support pour permettre une rotation du support (18) par rapport à la caisse (4) autour d'un axe sensiblement horizontal en cas de choc décalé verticalement vers le haut ou le bas du support (18).

3. - Face avant (2) selon la revendication 1 ou 2, **caractérisée en ce qu'**elle comprend au moins deux paires d'attaches (28), les attaches d'une paire étant alignées verticalement et espacées, chaque attache d'une paire étant alignée horizontalement avec une des attaches de chaque autre paire d'attaches.

4. - Face avant (2) selon la revendication 1 ou 2, **caractérisée en ce qu'**elle comprend au moins deux d'attaches (28) fixées sur un même bord latéral du support, les attaches étant non-alignées verticalement.

5. - Face avant (2) selon l'une quelconque des revendications précédentes, **caractérisée en ce que** les moyens de fixation sont constitués par quatre attaches (28).

6. - Face avant (2) selon l'une quelconque des revendication précédentes, **caractérisée en ce que** chaque attache (28) comprend une région de déformation (46, 58) s'étendant autour d'un axe et constituant une amorce de déformation programmée de l'attache, sans rupture, en cas de choc du côté de cette attache, et constituant une charnière d'axe l'axe de la région de déformation (46, 58) en cas de choc décalé du côté du support opposé à cette attache.

7. - Face avant (2) selon la revendication 6, **caractérisée en ce que** la région de déformation (46, 58) est arrondie.

8. - Face avant (2) selon la revendication 6 ou 7, **caractérisée en ce que** chaque attache (28) comprend un aile (48) s'étendant longitudinalement, la région de déformation (46) étant formée par un pli de l'aile, s'étendant sur toute la largeur de l'aile et faisant saillie sur une face de l'aile.

9. - Face avant (2) selon la revendication 8, **caractérisée en ce que** l'aile (48) est espacée transversalement du support (18), **en ce que** le pli fait saillie sur une face de l'aile tournée vers le support.

10. - Face avant (2) selon la revendication 6, **caractérisée en ce que** la partie intermédiaire (56) comprend une âme (58) arrondie formant région de déformation et deux ailes latérales (60, 62) s'étendant longitudinalement à partir de l'âme (58), une des ailes étant reliée au support (18), et l'autre aile étant destinée à être reliée à la caisse (4).

11. - Véhicule automobile comprenant une caisse, **caractérisé en ce qu'**il comprend une face avant selon l'une quelconque des revendications précédentes, fixée sur la caisse par les moyens de fixation.
